# EUROPEAN PATENT APPLICATION

(11) **EP 3 769 998 A1**
(43) Date of publication of application: **27.01.2021**
(21) Application number: 19187719.0
(22) Date of filing: 23.07.2019
(51) Int. Cl.: B60L 3/00, H02J 7/00, B60L 50/60

(54) **SWITCHING CIRCUIT FOR DC RAILWAY STATIONARY ENERGY STORAGE SYSTEM**

(71) Applicant: ABB Schweiz AG, 5400 Baden (CH)
(72) Inventor: Borkowski, Micha, 30-363 Krakow (PL); Jacukowicz, Rafa, 31-340 Krakow (PL); Antoniewicz, Patrycjusz, 30-611 Krakow (PL)
(74) Representative: AOMB Polska Sp. z.o.o.

(57) **Abstract**

The present invention relates to an energy storage system comprising an at least one energy storage unit connected to a storage bus line further comprising, an at least one overcurrent device installed in series on connection of the at least one energy storage unit to the storage bus line, an at least one switching device installed in series on connection of the at least one energy storage unit to the storage bus line, wherein the at least one switching device is connected to a negative pole of the storage bus line.

## Description

### Technical field

The present invention relates to a general field of a railway energy management system. More specifically, the present invention concerns an energy storage system comprising plurality of energy storage units with a functional switching device for normal operations and a disconnector to provide an isolation of the energy storage unit from the energy storage system that stores, recycles surplus energy generated during braking and returns it back to a traction power system.

### Background of the invention

In today's electric rail transit systems, regenerative braking systems are becoming the standard. The power generated from braking vehicles is fed back into the power supply and distribution network for use by other vehicles drawing power at the same time. If other vehicles are not available to use this regenerated power, the voltage on the distribution network rises to the value where the braking vehicles must terminate regeneration to the network. In these cases, the braking train will dissipate the kinetic energy as heat either through on-board resistors or through wayside resistors. In either case, the energy is lost. To prevent this energy from dissipation it may be stored in energy storage systems connected to the distribution network. An energy storage system may have functional switching devices for connecting and disconnecting the whole energy storage system on a single storage unit from the common storage bus.

Known energy storage systems with functional switching devices are disclosed for example in documents US7772806B2, WO2012164232A2 and CN104319832A.

Known energy storage systems comprise energy storage units which can be based on a supercapacitor technology, which is well known for its high performance, high duty cycle and low maintenance. Supercapacitors are uniquely able to combine the energy storage properties of batteries with the power discharge characteristics of capacitors. They are able to hold a very high charge which can be released in a controlled manner. By taking advantage of state-of-the-art technologies, the energy transfer becomes more reliable and efficient.

Energy storage systems comprise one or more energy storage units. Each energy storage system comprises a power converter controlling its own set of energy storage units. The energy storage units are monitored by a common supervisory controller. Each energy storage unit comprises a functional switching device connecting or disconnecting the energy storage unit from a storage bus line. The functional switching device may be mechanic - e.g. a connector, electric - e.g. a relay or contactor, electronic, in particular a power semiconductor device - e.g. IGBT (Insulated-gate bipolar transistor), or any device for connecting or disconnecting high current circuit, controlled manually, mechanically, electrically or electronically. The functional switching device is usually in a positive pole of the storage bus line so during a short-circuit a switching device of one energy storage unit is loaded by prospective currents of all energy storage units connected to the common storage bus line. The energy storage unit low self-inductance leads to a high current rate of rise which can damage contact of switching device before an overcurrent device will operate. Typically contacts point of switching device are damaged by welding together or burning out while overcurrent before the overcurrent device break short-circuit. The overcurrent device is typically a fuse-link or a short-circuit break device.

### Summary of the invention

Therefore, it is the object of the present invention to provide an energy storage system which eliminates the above-mentioned drawbacks, that is to simplify and decrease costs of a switching circuit for energy storage of many energy storage units.

In accordance with the present invention there is provided an energy storage system comprising an at least one energy storage unit which is connected to a storage bus line and comprising:
an at least one overcurrent device installed in series on connection of the at least one energy storage unit to the storage bus line;
an at least one switching device installed in series on connection of the at least one energy storage unit to the storage bus line;
wherein the at least one switching device is connected to a negative pole of the storage bus line.

The energy storage system may comprise a capacitor or a battery or a supercapacitor or combination thereof.

Preferably, the energy storage unit is connected to the storage bus line by a withdrawable part, preferably a socket-plug connector.

The present invention moves a functional switching device to a negative pole of a storage bus line so during a short-circuit a switching device is loaded only by one energy storage unit prospective current. A positive pole of a storage bus line will be interrupted by an overcurrent device (e.g. a fuse-link). Additionally, a disconnector function is realized by a withdrawable part of the energy storage system.

If a frame fault occurs (positive potential of module/cell to frame), voltage limiting devices (VLD) will transfer a high impedance fault to a short-circuit. Two short-circuit loops are formed: a small loop (one energy storage unit positive potential - frame - VLD - overcurrent device - switching device), and a big loop (one energy storage unit positive potential - frame - VLD - n-count storage power units - overcurrent device). During the short-circuit the switching device is loaded by prospective current only by one energy storage unit. This position of the switching device in the circuit minimizes possibility of damaging contacts e.g. by welding, of functional switching devices or switching device can be dimensioned on lower short-circuit withstand current. During the short-circuit the positive pole of the storage bus line of the energy storage unit will be interrupted by the overcurrent device (e.g. fuse-link) with high value of breaking current.

The present invention reinforces the critical supply areas without requiring installation of new traction power substations. For new transit systems or extensions will reduce the number and/or rating of new traction power substations required. Dissipating braking energy generates a large amount of heat especially in underground city railway system. This heat warms tunnels and stations and must be managed through ventilation. By ensuring the network is receptive the system minimizes the waste heat produced. The present invention eliminates or reduces the need for vehicle or wayside resistors by increasing the instances of re-using regenerated energy. In this example negative storage bus line is connected to the VLD unit, and the VLD unit is grounded by separate grounding, in such a case every energy storage unit connected to this energy storage bus line energy system is grounded by using separate grounding.

### Brief description of the drawings

The invention will now be described by a way of example only with reference to the accompanying drawings, in which:
Fig. 1 illustrates the energy management system known in the prior art wherein a switching device is connected to a positive pole of a storage system bus line.
Fig. 2 illustrates the present invention wherein a switching device is connected to a negative pole of a storage system bus line with a grounding and a voltage limiting device (VLD).
Fig. 3 illustrates the system according to the present invention wherein a switching device is connected to a negative pole of a storage system bus line without a grounding and voltage limiting device (VLD).

### Detailed description of the invention

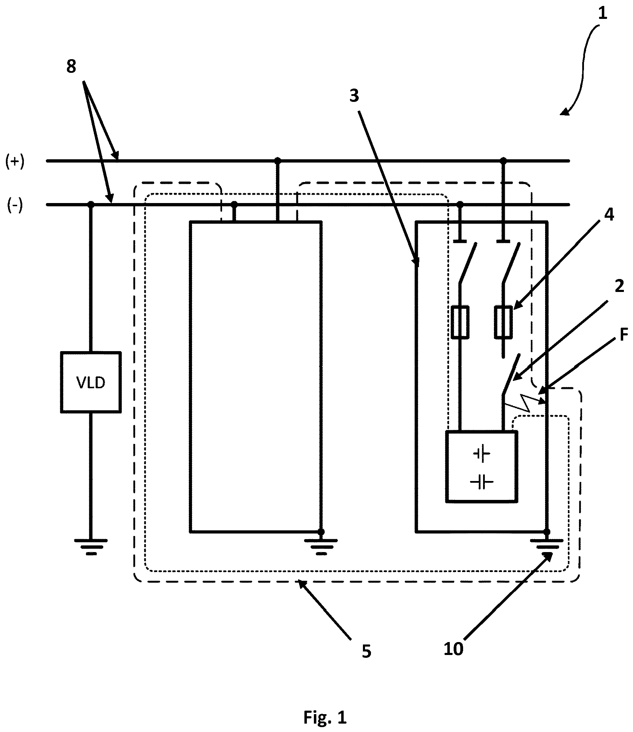

Fig. 1 illustrates the energy management system 1 from the state of the art comprising a functional switching device 2 in a positive pole of an energy storage unit 3, a short-circuit F in the energy storage unit, an overcurrent device 4, a voltage limiting device (VLD), a short-circuit big loop 5, and a ground connection 10. A short circuit F in the functional switching device 2 is usually in a positive pole of the storage bus line of the energy storage unit 3 so during said short-circuit F the switching device 2 of the energy storage unit 3 is loaded by prospective currents of all energy storage units 3 connected to a storage bus line 8. The energy storage unit 3 has low self-inductance which lead to high peak current in the functional switching device 2 while short circuited. High current can damage them e.g. weld or burn out contacts points of the switching device 2 before the overcurrent device 4 will operate.

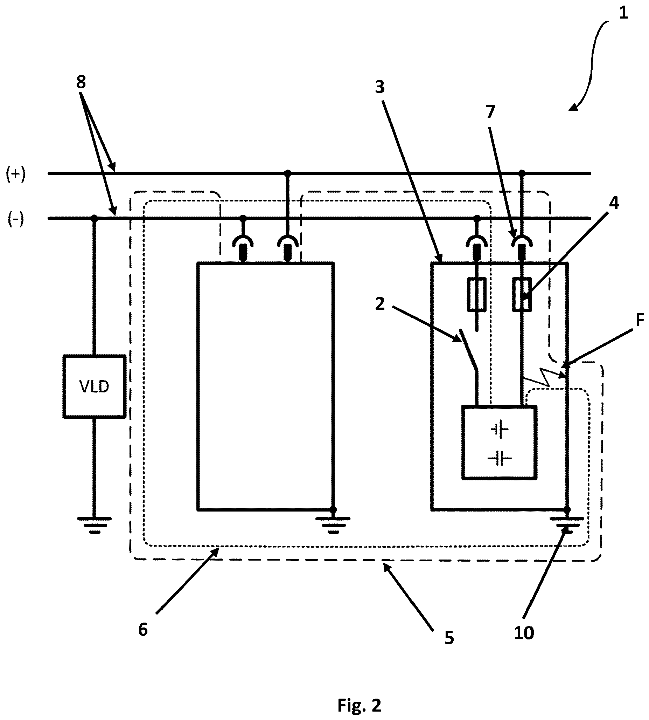

Fig. 2 illustrates the present invention comprising a functional switching device 2 in a negative pole of a storage bus line of an energy storage unit 3, a short-circuit F, an overcurrent device 4, a voltage limiting device VLD, a short-circuit big loop 5 and a small loop 6, an additional disconnector 7, and ground connection 10. The functional switching device 2 is moved to the negative pole of the storage bus line of the energy storage unit 3. In case of a short-circuit F the switching device 2 is loaded only by one energy storage unit 3 prospective current which is not high enough to damage it, e.g. weld or burn out contacts points of the switching device 2 before the overcurrent device 4 will operate. The positive pole of the storage bus line of the energy storage unit 3 will be interrupted by the overcurrent device 4 (e.g. fuse-link).

Additionally, a disconnector function can be realized by a withdrawable part 7 of the energy storage system.

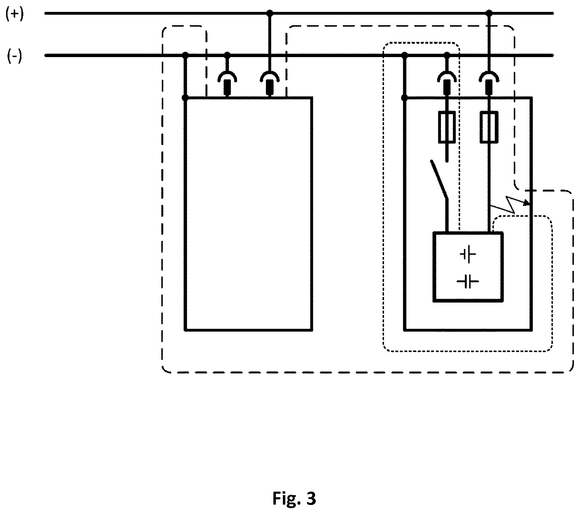

Fig. 3 illustrates the present invention according to another embodiment comprising a functional switching device 2 in a negative pole of an energy storage unit 3, a short-circuit F, an overcurrent device 4, a short-circuit big loop 5 and a small loop 6, an additional disconnector 7. The switching device 2 according to the present invention and the energy storage unit 3 has no grounding 10 and no voltage limiting device VLD.

## Claims

1. An energy storage system comprising an at least one energy storage unit (3) connected to a storage bus line (8) further comprising:
an at least one overcurrent device (4) installed in series on connection of the at least one energy storage unit (3) to the storage bus line (8);
an at least one switching device (2) installed in series on connection of the at least one energy storage unit (3) to the storage bus line (8);
**characterized in that** the at least one switching device (2) is connected to a negative pole of the storage bus line (8).

2. The energy storage system according to claim 1, **wherein** the energy storage unit (3) comprises a capacitor or a battery or a supercapacitor or combination thereof.

3. The energy storage system according to claim 1 or 2, **wherein** the energy storage unit (3) is connected to the storage bus line (8) by a withdrawable part (7), preferably a socket-plug connector.

4. The energy storage system according to claim 1, 2 or 3 **wherein** the energy storage unit (3) is grounded by a separate grounding (10) and the negative pole of the storage bus line (8) is connected to a voltage limiting device (VLD), and wherein the voltage limiting device (VLD) is also grounded.
